# EUROPEAN PATENT SPECIFICATION

(11) **EP 0 703 243 B1**
(45) Date of publication and mention of the grant of the patent: **13.12.2000**
(21) Application number: 95202556.7
(22) Date of filing: 22.09.1995
(51) Int. Cl.: C11D 17/00, C11D 3/39

(54) **Process for the preparation of a liquid detergent composition.**
Verfahren zur Herstellung einer flüssigen Detergenszusammensetzung
Procédé pour la préparation d'une composition détergente liquide.

(30) Priority: 26.09.1994 EP 94202766
(43) Date of publication of application: 27.03.1996
(73) Proprietor: UNILEVER N.V., 3000 DK Rotterdam (NL); UNILEVER PLC, London EC4P 4BQ (GB)
(72) Inventor: Brouwn, Lili Fausia, Unilever Research, NL-3130 AC Vlaardingen (NL); van de Pas, Johannes Cornelis, Unilever Research, NL-3130 AC Vlaardingen (NL); Visser, Adrianus, Unilever Research, NL-3130 AC Vlaardingen (NL); Winkel, Cornelis, Unilever Research, NL-3130 AC Vlaardingen (NL)
(74) Representative: Rosen Jacobson, Frans Lucas M.

(56) References cited:
- WO-A-91/09109
- US-A- 4 906 744
- DATABASE WPI Week 8915 Derwent Publications Ltd., London, GB; AN 109357 & JP-A-01 054 001 (SUGIYAMA SANGYOKAGA) , 1 March 1989 & PATENT ABSTRACTS OF JAPAN vol. 13 no. 249 (C-605) ,9 June 1989 & CHEMICAL ABSTRACTS, vol. 111, no. 8, 21 August 1989 Columbus, Ohio, US; page 115; column 59893g;
- MAKROMOLEKULARE CHEMIE, MACROMOLECULAR CHEMISTRY AND PHYSICS, vol. 187, no. 1, 1 January 1986 BASEL CH, pages 125-131, JOAN VERMEERSCH ET AL. 'Synthesis and characterization of inulin monosuccinates'

## Description

### Technical Field

The present invention relates to the preparation of a liquid detergent composition comprising polysaccharides that contain one or more hydrophobic side chains.

### Background & Prior Art

Hydrophobically modified (HM) polysaccharides are well-known in the art, as well as process for making such saccharides.

US 2,661,349 describes a process in which polysaccharides are converted with substituted cyclic dicarboxylic acid anhydrides to form ester compounds. The document describes that the conversion process can be carried out in an aqueous environment or according to a dry method. A third method describes the use of an organic suspension or dispersion of the polysaccharide. The suspended or dispersed particles of polysaccharide will only be able to react on the surface.

US 4,035,235 describes a method of making hydrophobically modified starch derivatives by esterification of the starch with n-octenyl succinic anhydride in an aqueous environment. The starch derivatives contains from about 0.1 to 10% by weight of anhydride, based on the dry weight of starch.

HM polysaccharides can be used for various purposes, including food and detergent products. One of such uses is their applications in liquid detergent compositions comprising a structure of lamellar droplets as e.g. described in EP 346,995, EP 505,371 and GB 2,256,646, where they are called deflocculating polymers.

An emulsifier or detergent produced by reacting an esterifying starch of at least on average, 10 glucose units and an aliphatic acid chloride or anhydride in the presence of a proton-polar solvent and a basic catalyst is described in JP-A-1054001.

We have found a particular way to prepare hydrophobically modified polysaccharides as deflocculating polymers, that results in more clearly defined modified polysaccharides. We have found that the resulting polysaccharides have the benefit of showing good deflocculating properties in lamellar structured liquids.

### Statement of the Invention

The invention provides a process for preparing an aqueous liquid detergent composition comprising lamellar droplets of surfactant material comprising the steps of:
(i) preparing a polysaccharide material with one or more hydrophobic side chains by preparing a mixture of polysaccharide, hydrophobic chain containing compound and solvent material, wherein said mixture comprises at most 25% by weight of water and wherein the polysaccharide is in a dissolved state; and
(ii) mixing water, surfactant material and said polysaccharide material.

Optionally, the mixture also contains a base material.

### Description of the Invention

Without wishing to be bound by any theory, it is believed that step (i) of the process of the present invention leads to a homogeneous reaction mixture and the hydrophobic side chains will be homogeneously distributed between all sugar units that are available for bonding with the hydrophobic compound. This results in a homogeneous distribution of the hydrophobic side-chains, not only within each polysaccharide molecule, but also between the various molecules. It is believed that such homogeneous distribution is beneficial to the use of the hydrophobically modified polysaccharides, i.e. they are better defined, which is e.g. useful when they are used as deflocculating polymers in lamellar structured liquid detergent compositions.

### Polysaccharides

Polysaccharides that can be used in the process of the present invention may be selected from pentose and hexose ring structures, e.g. starch, (gelatinized or ungelatinized; degraded; from any source: corn, tapioca, potato, wheat, sago, rice, waxy maize, dextrins), cellulose, hemi-cellulose, inuline, dextran and levan. Preferred compounds are starch, inuline, fibrulin, dextran, sinistrin and pullulan.

Preferably the polysaccharide is present at a level of 10 to 90% by weight of the reaction mixture.

Preferably the polysaccharide have a weight average molecular weight in the region of from 500-500,000, preferably 750-100,000, most preferably 1,000 to 30,000, especially from 2,000 to 10,000, when measured by GPC using polyacrylate standards, as measured by the absolute intrinsic viscosity method described by Noda, Tsoge and Nagasawa in Journal of Physical Chemistry, Volume 74, (1970), page 710-719.

### Hydrophobic Chain Containing Compound

Hydrophobic chain containing compounds that may be used in processes of the present invention are C6-C24 alk(en)yl containing compounds, e.g. C6-C24 alk(en)yl succinic anhydride material. Preferably, the alk(en)yl chain is at least C8, more preferably at least C9 and preferably the alk(en)yl chain is at most C22, more preferably at most C18. Optionally, the anhydride material contains from 1 to 50 poly(oxyethylene) groups between the alk(en)yl chain and the succinic anhydride group.

Preferably the hydrophobic chain containing compound is present at a level of 0.01 to 25%, more preferably 0.1 to 15%, most preferably 1 to 10% by weight of the reaction mixture.

### Solvent

Solvents that may be used in processes of the present invention may be selected from materials in which the polysaccharide is soluble. Preferred solvents are selected from dimethylformamide, dimethyl sulfoxide, pyridine, N-methyl imidazole, acetonitrile, tetrahydrofuran, aceton and mixtures thereof.

Preferably, the solvent is present at a level of 10 to 90%, more preferably 20 to 80%, most preferably 30 to 70% by weight of the reaction mixture.

### Base material

Optionally, the reaction mixture also contains a base material. This material may be selected from any material that has a 1% pH in water at ambient temperature of higher than 7. Preferably the base material is selected from pyridine, N-methyl imidazole, dimethylamino pyridine, sodium or potassium hydroxide, sodium or potassium carbonate. It will be understood that other base material that is suggested in the art for use in acid anhydride-alcohol reactions, may also be used in the reaction of the present invention.

Preferably the base material is present at a level of 0 to 90%, more preferably 5%-80%, most preferably at least 10-70% by weight of the reaction mixture.

### Reaction mixture

Preferably, the water level in the reaction mixture is at most 25% by weight, more preferably at most 20% by weight, most preferably at most 15% by weight, in particular at most 10% by weight.

Preferably, the weight ratio between the polysaccharide and the hydrophobing compound is from 4:1 to 1000:1, more preferably from 6:1 to 250:1, most preferably 10:1 to 100:1.

Preferably, the weight ratio between the polysaccharide and the solvent is lower than 200:1, more preferably lower than 50:1. Preferably, the weight ratio is higher than 1:100, more preferably higher than 1:50, most preferably higher than 1:20, in particular 1:10, e.g. higher than 1:4.

The polysaccharide is homogeneously mixed with the solvent material and the hydrophobic chain containing compound.

### Preparation Process

Surprisingly, it has been found that when the polysaccharide is dissolved in a low water reaction mixture, the polysaccharide material becomes substituted with hydrophobic sidechains which are homogeneously distributed between the groups on the sugar units that are available for bonding with the hydrophobic compound. We have found that these conditions lead to a homogeneous distribution of the hydrophobic side-chains within each polysaccharide molecule as well as between the various polysaccharide molecules results. Such compounds are then used as deflocculating polymers in lamellar structured liquid detergent compositions.

The process temperature is preferably held between 25 and 125°C, although at higher temperatures (at least 55, more preferably at least 75, most preferably at least 85°C) the results are better. Preferably, the temperature is at most 115, more preferably at most 105, most preferably at most 95°C.

The polymer can thereafter be purified by evaporation of the solvent or by precipitation, e.g. by using diethyl ether, methanol or preferably by using aceton.

### Hydrophobically Modified (HM) Polysaccharide

Preferably, the degree of substitution (DS; the number of hydrophobic groups per sugar unit) is from 0.001 tot 0.20, more preferably from 0.01 to 0.10.

Preferably the HM polysaccharide contain on average at least 0.1, more preferably at least 0.2, most preferably at least 0.5 and preferably at most 3, more preferably at most 2 anchors per polysaccharide molecule.

### Identification of the HM polysaccharide - DS

The degree of hydrophobic modification is expressed as the degree of substitution (DS) and is defined as the amount of anchors per monosaccharide unit. For polymers of hexose-sugars the maximum DS is 3 since there are 3 free OH-groups per monosaccharide unit.

In the ¹H-NMR spectrum the signals deriving from the polysaccharide and the alk(en)yl chain are quite different.

Using the integral from these signals, the number of alk(en)yl chains that are present can be easily calculated and the DS is calculated (it is assumed that all alk(en)yl chain present is covalently bound to the polysaccharide which assumption was thought to be reasonable because the products obtained were carefully washed with solvents that are very good solvents for the starting alk(en)yl reagents or possibly formed side-products. Also further washing had no effect on the calculated DS so it was quite likely that indeed the alk(en)yl chains were covalently bound to the polysaccharide).

### Identification of the HM polysaccharide - Molecular Weight

The molecular weight of the polysaccharides (DP) is expressed as the degree of polymerization (DP = number of monosaccharide units). This value will always be an averaged number. Molecular weight determinations are normally made using gel permeation chromatography (GPC) techniques. For inulin ¹H-NMR spectroscopy, ion-exchange chromatography or a Dionex column may be used.

### Liquid characteristics

Polymers that are prepared according to the present invention may be used in liquid detergent compositions comprising lamellar droplets of surfactant material.

The dispersed structuring phase in such liquids is generally believed to consist of an onion-like configuration comprising concentric bilayers surfactant molecules, between which water is trapped, the aqueous phase. Liquids with a lamellar droplets structure provide a very desirable combination of physical stability and solid-suspending properties with useful flow properties, i.e. low viscosity with stability. Such liquids have for example been described in A. Jurgens, Microstructure and Viscosity of Liquid Detergent, Tenside Surfactants Detergent 26 (1989) 222 and J.C. van de Pas, Liquid Detergents, Tenside Surfactants Detergents 28 (1991) 158.

The presence and identity of a surfactant structuring system in a liquid may be determined by means known to those skilled in the art for example, optical techniques, various rheometrical measurements, X-ray or neutron diffraction, and sometimes, electron microscopy.

Liquids with lamellar droplets including the kind and level of ingredients have been described in EP 346,995 and GB 2,256,646. These two documents are herewith incorporated herein by reference.

Liquids with lamellar droplets generally comprise from 10-70% by weight of surfactant material, from 1-60% by weight of electrolyte material, from 10-60% by weight of water and may further comprise from 1-5% by weight of the HM polysaccharide material of the invention.

Aqueous liquid detergent composition comprising lamellar droplets of surfactant material may be prepared by mixing of water and surfactant material, optionally in the presence of electrolyte material. The polysaccharide material with one or more hydrophobic sidechains may be added before, during or after the mixing.

### Examples

### Example - Comparison between no and low solvent reactions

### Reaction with no solvent:

Dodecenyl succinic anhydride (1.3 g) and 4-dimethylamino pyridine (1.3 g) were dissolved in 100 ml of dichloromethane. This solution was added to inulin (24 g) in a round bottomed flask. The solvent was quickly removed in vacuo. The reaction flask was than placed in such a way that it could be horizontally rotated and a homogeneous mixing could be performed. The flask was than heated to 130°C and the mixture reacted for 2 hours. After cooling the reaction mixture was poured in acetone. After filtration and drying 22 g product was obtained, which had (according to ¹H-NMR) a DS = 0.02.

### Low solvent reaction:

A mixture of inulin (25 g; 154 mequivalents), dodecenyl succinic anhydride (1.5g; 6 mmol), pyridine (lg) and dimethylformamide (15g DMF) was mixed and heated to 80-90°C. After about 20 minutes a clear homogeneous and very viscous reaction mixture was obtained. This mixture was stirred for 3 hours at about 85°C. The mixture was poured in acetone and the product was obtained after filtration and drying (the product can also be obtained by evaporating the solvent). 27 g product was obtained, which according to ¹H-NMR had a DS = 0.03.

The results of the syntheses is listed in the table as well as the viscosity and flocculation degree of liquids with lamellar droplets of surfactant material containing the polysaccharides with the hydrophobic side chains. The invention will be illustrated in the following table.

**TABLE**

| Inulin Floccul. mequiv 1) | DSA 2)mmol | DS 3) found | Inul/ DMF 4) w/w | Anchors/ molecule | Visc. 5) mPas at at 21 s⁻¹ | Degree 6) |
|---|---|---|---|---|---|---|
| 148 | 5 | 0.02 | no solvent | 0.7 | 240 | fl |
| 92.5 | 6 | 0.02 | 0.15 | 0.8 | 40 | sfl |
| 154 | 6 | 0.03 | 0.5 | 1.0 | 110 | pfl |
| 154 | 6 | 0.02 | 1 | 0.7 | 140 | pfl |
| 154 | 6 | 0.02 | 1.68 | 0.8 | 140 | pfl |

| | | | | | | |
|---|---|---|---|---|---|---|
| 1) Expressed as hexose units; ex Inuline dahlia | | | | | | |
| 2) Dodecenyl Succinic Acid | | | | | | |
| 3) DS is degree of substitution | | | | | | |
| 4) dimethylformamide (DMF) | | | | | | |
| 5) Viscosity resulting after addition of the HM inuline to a lamellar structured liquid that was prepared by dissolving 20 parts of electrolyte in 60 parts of water, whereafter 40 parts of active and 1 part of polymer was added. The liquid without the HM inuline is strongly flocculated, unstable and its viscosity is about 3000. | | | | | | |
| 6) As observed by light microscopy, wherein fl = flocculated sfl = slightly flocculated pfl = partly flocculated | | | | | | |

## Claims

1. A process for preparing an aqueous liquid detergent composition comprising lamellar droplets of surfactant material comprising the steps of:
(i) preparing a polysaccharide material with one or more hydrophobic side chains by preparing a reaction mixture of polysaccharide, hydrophobic chain containing compound and solvent material, wherein said mixture comprises at most 25% by weight of water and wherein the polysaccharide is in a dissolved state; and
(ii) mixing water, surfactant material and said polysaccharide material.

2. A process according to claim 1, characterised in that the solvent in step (i) is selected from dimethylformamide, dimethyl sulfoxide, pyridine, N-methyl imidazole, acetonitrile, tetrahydrofuran, aceton and mixtures thereof.

3. A process according to claim 1, characterised in that the hydrophobic chain containing compound has a C₈-C₂₀ alk(en)yl chain.

4. A process according to claim 1, characterised in that the polysaccharide is selected from starch, degraded starch, cellulose, hemi-cellulose, inuline, dextran and levan.

5. A process according to claim 1, characterised in that the polysaccharide with one or more hydrophobic side chains has a degree of substitution of 0.001 to 0.2.

## Patentansprüche

1. Ein Verfahren für die Herstellung einer wässerigen flüssigen Detergenszusammensetzung, enthaltend lamellare Tröpfchen von Tensid-Material, umfassend die Stufen von:
(i) der Herstellung eines Polysaccharid-Materials mit einer oder mehreren hydrophoben Seitenketten durch Herstellen einer Reaktionsmischung von Polysaccharid, hydrophobe Kette enthaltenden Verbindung und Lösungsmittel-Material, worin die erwähnte Mischung höchstens 25 Gew.-% Wasser enthält, und worin das Polysaccharid in einem aufgelösten Zustand ist; und
(ii) dem Mischen von Wasser, Tensid-Material und dem erwähnten Polysaccharid-Material.

2. Ein Verfahren nach Anspruch 1, dadurch gekennzeichnet, daß das Lösungsmittel in Stufe (i) aus Dimethylformamid, Dimethylsulfoxid, Pyridin, N-Methylimidazol, Acetonitril, Tetrahydrofuran, Aceton und Mischungen derselben, ausgewählt ist.

3. Ein Verfahren nach Anspruch 1, dadurch gekennzeichnet, daß die hydrophobe Kette enthaltende Verbindung eine C₈₋₂₀-Alk(en)yl-Kette hat.

4. Ein Verfahren nach Anspruch 1, dadurch gekennzeichnet, daß das Polysaccharid aus Stärke, abgebauter Stärke, Cellulose, Hemi-cellulose, Inulin, Dextran und Levan ausgewählt ist.

5. Ein Verfahren nach Anspruch 1, dadurch gekennzeichnet, daß das Polysaccharid mit einer oder mehreren hydrophoben Seitenketten einen Substitutionsgrad von 0,001 bis 0,2 hat.

## Revendications

1. Procédé de préparation d'une composition détergente liquide aqueuse comprenant des gouttelettes lamellaires de tensioactif comprenant les stades de :
(i) préparer un polysaccharide avec une ou plusieurs chaînes latérales hydrophobes en préparant un mélange de réaction de polysaccharide, de composé contenant une chaîne hydrophobe et de solvant, ledit mélange comprenant au plus 25% en poids d'eau et le polysaccharide étant à l'état dissous, et
(ii) mélanger l'eau, le tensioactif et ledit polysaccharide.

2. Procédé selon la revendication 1, caractérisé en ce que le solvant au stade (i) est choisi parmi le diméthylformamide, le diméthyl-sulfoxyde, la pyridine, le N-méthylimidazole, l'acétonitrile, le tétrahydrofuranne, l'acétone et leurs mélanges.

3. Procédé selon la revendication 1, caractérisé en ce que le composé contenant une chaîne hydrophobe a une chaîne alkyle/alcényle en C8-20.

4. Procédé selon la revendication 1, caractérisé en ce que le polysaccharide est choisi parmi l'amidon, l'amidon dégradé, la cellulose, l'hémicellulose, l'inuline, le dextrane et le lévane.

5. Procédé selon la revendication 1, caractérisé en ce que le polysaccharide avec une ou plusieurs chaînes latérales hydrophobes a un degré de substitution de 0,001 à 0,2.
